# EUROPÄISCHE PATENTSCHRIFT

(11) **EP 4 302 928 B1**
(45) Veröffentlichungstag und Bekanntmachung des Hinweises auf die Patenterteilung: **27.05.2026**
(21) Anmeldenummer: 22211746.7
(22) Anmeldetag: 06.12.2022
(51) Int. Cl.: B25F 5/02, B27B 17/00, A01G 3/053, B24B 27/08

(54) **HANDGEFÜHRTES, AKKUBETRIEBENES ARBEITSGERÄT**
HAND-HELD, BATTERY-OPERATED TOOL
APPAREIL DE TRAVAIL PORTATIF FONCTIONNANT SUR ACCUMULATEUR

(30) Priorität: 07.07.2022 DE 102022116975
(43) Veröffentlichungstag der Anmeldung: 10.01.2024
(73) Patentinhaber: Andreas Stihl AG & Co. KG, 71336 Waiblingen (DE)
(72) Erfinder: Diehl, Heiko, 73732 Esslingen (DE); Böpple, Daniel, 70329 Stuttgart (DE); Härtel, Alexander, 71640 Ludwigsburg (DE)
(74) Vertreter: Karzel, Philipp

(56) Entgegenhaltungen:
- CN-A- 102 416 504
- DE-A1- 102009 012 178
- SE-A1- 1 951 341

## Beschreibung

Die Erfindung betrifft ein handgeführtes, akkubetriebenes Arbeitsgerät nach dem Oberbegriff des Anspruchs 1. Weiterhin betrifft die Erfindung ein handgeführtes, akkubetriebenes Arbeitsgerät nach dem Oberbegriff des Anspruchs 11.

Derartige Arbeitsgeräte besitzen in der Regel einen Akkuschacht zur Aufnahme eines Akkupacks. Um Falltestanforderungen zu erfüllen, sollte der Akkuschacht sehr robust gestaltet sein. Das entsprechende Gehäuse muss eine starke Verrippung aufweisen und nimmt entsprechenden Bauraum in Anspruch.

Ein solches Arbeitsgerät ist aus dem Dokumenten DE 10 2009 012 178 A1 bekannt.

Die Dokumente CN 102 416 504 A und SE 1 951 341 A1 zeigen Arbeitsgeräte, bei denen der Akku in einer Abstellposition des Arbeitsgeräts auf einer Horizontalebene parallel zur Horizontalebene in den Akkuschacht einführbar ist.

Der Erfindung liegt die Aufgabe zugrunde, ein gattungsgemäßes Arbeitsgerät derart weiterzubilden, dass eine kompakte und gleichzeitig gegenüber einem Aufprall des Arbeitsgeräts robuste Gestaltung des Arbeitsgeräts möglich ist.

Diese Aufgabe wird durch ein handgeführtes, akkubetriebenes Arbeitsgerät mit den Merkmalen des Anspruchs 1 gelöst.

Diese Aufgabe wird durch handgeführtes, akkubetriebenes Arbeitsgerät mit den Merkmalen des Anspruchs 11 gelöst.

Die Erfindung sieht gemäß Anspruch 1 vor, dass eine gedachte Tangentialebene des Gehäuses das Griffrohr tangiert und das Gehäuse im Bedienbereich tangiert. Insbesondere tangiert die gedachte Tangentialebene den Bedienbereich des Gehäuses in einer Seitenansicht senkrecht auf die Längsebene in einem Berührpunkt. Die Tangentialebene tangiert das Gehäuse lediglich. Die Tangentialebene des Gehäuses schneidet das Gehäuse nicht. Der Bedienbereich erstreckt sich, insbesondere in Blickrichtung senkrecht auf die Längsebene, in Richtung der Längsachse des Gehäuses. Am bezüglich der Längsachse vorderen Ende des Gehäuses ist das Werkzeug angeordnet. Der Bedienbereich ist dem bezüglich der Längsachse hinteren Ende des Gehäuses zugeordnet. Im Bedienbereich ist das Bedienelement zur Bedienung des Elektromotors angeordnet. Im Bedienbereich ist die Grifföffnung angeordnet. Der Bedienbereich erstreckt sich in Richtung der Längsachse des Gehäuses von dem hinteren Ende des Gehäuses bis zu dem Abstandspunkt. Der Abstandspunkt ist der Punkt oder die Stelle der Grifföffnung, der oder die den größten, in Richtung der Längsachse gemessenen Abstand zu dem hinteren Ende des Gehäuses besitzt. Insbesondere weist das Gehäuse einen Frontbereich auf, der sich in Richtung der Längsachse von dem Abstandspunkt zu dem vorderen Ende des Gehäuses erstreckt. Insbesondere ist das Gehäuse in Richtung der Längsachse ausschließlich in zwei Hauptbereiche, nämlich in den Bedienbereich und den Frontbereich unterteilt. Die Grifföffnung durchdringt das Gehäuse in Richtung quer zu der Längsebene, insbesondere in Richtung senkrecht zu der Längsebene vollständig. Die Längsebene enthält die Längsachse. Die Längsebene verläuft in der Abstellposition des Arbeitsgeräts senkrecht zu der Horizontalebene. Das Arbeitsgerät ist so ausgelegt, dass es in der dafür vorgesehenen Abstellposition auf der Horizontalebene abstellbar ist. Insbesondere besitzt das Arbeitsgerät eine Abstellfläche. Die Horizontalebene verläuft in der Horizontalen. Das Griffrohr umgreift das Gehäuse zumindest teilweise. Insbesondere übergreift das Griffrohr das Gehäuse. Die gedachte Tangentialebene schneidet das Griffrohr nicht. Insbesondere tangiert die gedachte Tangentialebene das Gehäuse in der Abstellposition auf der der Horizontalebene abgewandten Seite des Arbeitsgeräts.

Dadurch, dass die gedachte Tangentialebene an dem Griffrohr des Arbeitsgeräts anliegt und das Gehäuse im Bedienbereich tangiert, liegt der Bereich des Gehäuses, der in Richtung der Längsachse zwischen dem Abstandspunkt und dem vorderen Ende des Gehäuses angeordnet ist, bei einem Aufprall des Arbeitsgeräts geschützt. In diesem Zwischenbereich stehen keine Teile des Gehäuses über die gedachte Tangentialebene hervor. Insbesondere bei einem Aufprall der Motorkettensäge mit der gedachten Tangentialebene auf die Horizontalebene ist der Zwischenbereich geschützt. Bei einem solchen Aufprall ist insbesondere die Normale der Tangentialebene senkrecht zur Horizontalebene. Demnach fällt das Arbeitsgerät so auf die Horizontalebene, dass die gedachte Tangentialebene die Horizontalebene bei einem Erstkontakt flächig kontaktiert.

Die gedachte Tangentialebene tangiert den Bedienbereich in einem Berührpunkt. Insbesondere ist der Berührpunkt der Punkt des Bedienbereichs mit dem größten Abstand zu der Horizontalebene.

Die Tangentialebene besitzt eine erste Seite und eine zweite Seite. Die erste Seite ist in der Abstellposition des Arbeitsgeräts der Horizontalebene zugewandt. Bevorzugt ist der Frontbereich des Gehäuses ausschließlich auf der ersten Seite der gedachten Tangentialebene angeordnet. Dadurch liegt der Frontbereich, insbesondere der im Frontbereich angeordneter Akkuschacht bei einem Aufprall geschützt.

Insbesondere weist der Frontbereich zu der gedachten Tangentialebene einen Frontbereichabstand auf. Vorteilhaft ist der Frontbereichabstand so klein gewählt und das Arbeitsgerät so ausgelegt, dass der Frontbereich des Gehäuses bei einem Aufprall des Arbeitsgeräts mit der gedachten Tangentialebene auf der Horizontalebene die Horizontalebene kontaktieren kann. Dadurch kann der Frontbereich, insbesondere der im Frontbereich angeordneter Akkuschacht, bei einem Aufprall des Arbeitsgeräts als Abstützpunkt dienen, über den Energie in das Gehäuse aufgenommen wird. Dadurch verteilt sich die Energie, die bei einem Aufprall des Arbeitsgeräts in das Gehäuse aufgenommen werden muss, auf mehrere Punkte.

Die gedachte Tangentialebene tangiert den Bedienbereich des Gehäuses in der Abstellposition in einer Seitenansicht senkrecht auf die Längsebene in dem Berührpunkt. Vorteilhaft ist der Frontbereichabstand kleiner als 10% des Abstands des Berührpunkts zu der Horizontalebene. Insbesondere ist der Frontbereichabstand kleiner als 5%, bevorzugt kleiner als 3% des Abstands des Berührpunkts zu der Horizontalebene. Insbesondere berührt die gedachte Tangentialebene den Frontbereich. In diesem Fall beträgt der Frontbereichabstand 0% des Abstands des Berührpunkts zu der Horizontalebene. Dadurch, dass der Frontbereichabstand klein gewählt ist, kann der Frontbereich als Abstützelement des Gehäuses bei einem Aufprall, insbesondere bei einem Aufprall der Tangentialebene auf die Horizontalebene, dienen.

Insbesondere ist in dem Frontbereich des Gehäuses der Akkuschacht so angeordnet, dass das Gehäuse den Akku umschließen kann. Insbesondere steht der Akkuschacht nicht über die gedachte Tangentialebene hervor. Das Arbeitsgerät und der Akkuschacht sind vorteilhaft so ausgelegt, dass ein in dem Akkuschacht angeordneter Akkupack ausschließlich auf der ersten Seite der gedachten Tangentialebene angeordnet ist. Dadurch liegt auch der Akkupack bei einem Aufprall geschützt.

In vorteilhafter Weiterbildung der Erfindung besitzt der Frontbereich des Gehäuses einen Aufprallvorsprung. Der Aufprallvorsprung ist insbesondere Teil des Gehäuses. Der Aufprallvorsprung steht in Richtung auf die Tangentialebene hervor. Bevorzugt weist der Frontbereich im Bereich des Aufprallvorsprungs den kleinsten Abstand zur Tangentialebene auf. Insbesondere ist der Aufprallvorsprung Teil des Akkuschachts.

Bevorzugt bildet der Aufprallvorsprung eine Außenwand des Akkuschachts. Insbesondere dient der Aufprallvorsprung bei einem Aufprall des Arbeitsgeräts mit der gedachten Tangentialebene auf der Horizontalebene zusätzlich zu dem Berührpunkt der Tangentialebene im Bedienbereich des Gehäuses und dem Griffrohr als Energieeinleitungsstelle für Energie in das Gehäuse des Arbeitsgeräts.

Vorteilhaft umfasst das Arbeitsgerät ein Betätigungselement zum Auswerfen eines Akkus aus dem Akkuschacht. Bevorzugt ist das Arbeitsgerät so gestaltet, dass das Betätigungselement bei einem Aufprall des Arbeitsgeräts durch den Aufprallvorsprung geschützt ist. Insbesondere kann das Betätigungselement zu der gedachten Tangentialebene einen größeren Abstand als der Aufprallvorsprung aufweisen. Dadurch ist sichergestellt, dass die Funktionalität des Betätigungselements auch nach einem Aufprall des Arbeitsgeräts weiterhin gegeben ist.

In vorteilhafter Weiterbildung der Erfindung weist der Bedienbereich einen Handanschlag zur Anlage der Hand bei Betätigung des Bedienelements auf. Vorteilhaft tangiert die gedachte Tangentialebene den Bedienbereich an dem Handanschlag. Dadurch kann der Handanschlag gleichzeitig als Energieeinleitungspunkt bzw. Energieeinleitungsstelle beim Aufprall des Arbeitsgeräts genutzt werden.

Bevorzugt ist der Handanschlag als Vorsprung des Bedienbereichs ausgebildet. Insbesondere ist der Handanschlag im Wesentlichen höckerförmig. Dadurch kann das Arbeitsgerät bei einem Aufprall über den Vorsprung des Bedienbereichs abrollen und anschließend auch über das Griffrohr Energie aufnehmen.

In den Akkuschacht ist in der Einführrichtung der Akku einführbar. Bevorzugt verläuft die Einführrichtung parallel zu der Längsebene. Vorteilhaft ist die Einführrichtung in der Abstellposition in einem Winkel von 80° bis 90° gegen die Horizontalebene geneigt. Es kann auch vorgesehen sein, dass die Einführrichtung senkrecht auf die Horizontalebene steht. Insbesondere weist der Akkuschacht eine Einführöffnung auf.

Bevorzugt ist die Einführöffnung in der Abstellposition auf der der Horizontalebene abgewandten Seite des Arbeitsgeräts angeordnet. Insbesondere öffnet die Einführöffnung den Akkuschacht in der Abstellposition in Richtung weg von der Horizontalebene. Durch diese Anordnung des Akkupacks ist eine ergonomische und ausbalancierte Gestaltung des Arbeitsgeräts möglich. Der Akkupack kann beispielsweise im Schwerpunkt des Arbeitsgeräts angeordnet werden. Das Ein- und Ausführen des Akkupacks in und aus dem Akkuschacht ist auf komfortable Weise in der Abstellposition von oben möglich. Insbesondere ist der Akkuschacht so ausgebildet, dass das Gehäuse einen im Akkuschacht aufgenommenen Akku umschließt.

In vorteilhafter Weiterbildung der Erfindung weist das Arbeitsgerät im Bedienbereich ein weiteres Bedienelement auf. Das weitere Bedienelement dient bevorzugt zum Entsperren des Bedienelements oder zum Halten eines Sperrelements in einer Entsperrposition. Insbesondere ist das weitere Bedienelement ein Sperrelement zur Sperrung des Bedienelements oder ein Halteelement. Das Sperrelement ist insbesondere so vorgesehen, dass das Bedienelement nur betätigt werden kann, wenn auch gleichzeitig das Sperrelement betätigt wird. Das Halteelement hält bei Betätigung bevorzugt das Sperrelement in einer Entsperrposition, in der die Betätigung des Bedienelements möglich ist. Insbesondere ist das weitere Bedienelement an dem Bedienbereich des Gehäuses angeordnet. Vorteilhaft liegt der Berührpunkt der gedachten Tangentialebene an dem Bedienbereich des Gehäuses in der Seitenansicht senkrecht auf die Längsebene bezüglich der Richtung der Längsachse zwischen dem weiteren Bedienelement und dem Frontbereich. Dadurch können die durch das Griffrohr und an dem Berührpunkt ausgebildeten Energieeinleitpunkte bezüglich der Richtung der Längsachse nah beieinander liegen. Dadurch ergibt sich ein robustes Arbeitsgerät, das die bei einem Aufprall abzufangende Energie gut aufnehmen kann.

In alternativer erfindungsgemäßer Lösung der Aufgabe gemäß einem Arbeitsgerät mit den Merkmalen des Anspruchs 11 steht der Handanschlag über die gedachte Berührebene hervor. Die gedachte Berührebene verläuft senkrecht zur Längsebene. Die gedachte Berührebene tangiert den Akkuschacht. Die gedachte Berührebene verläuft durch den Tiefpunkt. In dem Bedienbereich des Gehäuses ist ein weiteres Bedienelement vorgesehen. Das weitere Bedienelement kann insbesondere ein Sperrelement zur Sperrung des Bedienelements oder ein Halteelement sein. Das Sperrelement ist insbesondere so vorgesehen, dass das Bedienelement nur betätigt werden kann, wenn auch gleichzeitig das Sperrelement betätigt wird. Das Halteelement hält bei Betätigung bevorzugt das Sperrelement in einer Entsperrposition, in der die Betätigung des Bedienelements möglich ist. Das weitere Bedienelement ragt aus einer Bedienelementöffnung im Bedienbereich hervor. Das weitere Bedienelement ragt in Richtung weg von der Horizontalebene aus der Bedienelementöffnung hervor. In der Abstellposition des Arbeitsgeräts weist die Bedienelementöffnung in einer Seitenansicht senkrecht auf die Längsebene den Tiefpunkt auf. Der Tiefpunkt entspricht dem Punkt der Bedienelementöffnung, der in der Abstellposition den kleinsten Abstand zu der Horizontalebene aufweist. Es kann vorgesehen sein, dass es sich bei dem Tiefpunkt um eine Tiefstelle handelt. Auch bei dem Arbeitsgerät nach Anspruch 11 ist durch das Gehäuse im Bedienbereich ein Handanschlag zur Anlage der Hand bei Betätigung des Bedienelements ausgebildet. Das Gehäuse weist einen Akkuschacht auf. Im Gegensatz zur Tangentialebene des Gehäuses schneidet die Berührebene das Gehäuse.

Dadurch, dass der Handanschlag über die gedachte Berührebene hervorsteht, ist der Akkuschacht bei einem Aufprall des Arbeitsgeräts geschützt, bei dem sich das Arbeitsgerät so auf die Horizontalebene zubewegt, dass die Normale der Berührebene parallel zur Normalen der Horizontalebene verläuft. Dadurch kann der Akkuschacht bauraumsparend gestaltet sein.

Insbesondere ist die Bedienelementöffnung in der Abstellposition auf der der Horizontalebene abgewandten Seite des Griffgehäuses angeordnet.

Vorteilhaft weist der Akkuschacht eine Außenwand auf, die von der gedachten Berührebene tangiert wird. In vorteilhafter Weiterbildung des erfindungsgemäßen Gegenstands gemäß Anspruch 11 ist der Handanschlag als Vorsprung des Bedienbereichs des Gehäuses ausgebildet. Insbesondere ist der Handanschlag im Wesentlichen höckerförmig.

Die Berührebene schneidet den Handanschlag. Auch der erfindungsgemäße Gegenstand gemäß Anspruch 11 kann derart weitergebildet werden, dass ein Akku in einer Einführrichtung in den Akkuschacht einführbar ist, und dass die Einführrichtung parallel zur Längsebene verläuft. Insbesondere kann vorgesehen sein, dass der Akkuschacht eine Einführöffnung aufweist, und dass die Einführöffnung in der Abstellposition auf der der Horizontalebene abgewandten Seite des Arbeitsgeräts angeordnet ist.

Ausführungsbeispiele der Erfindung werden im Folgenden anhand der Zeichnung erläutert. Es zeigen:
- Fig. 1: eine schematische Seitenansicht eines als Motorkettensäge ausgebildeten Arbeitsgeräts,
- Fig. 2: eine schematische Draufsicht von oben auf das Arbeitsgerät aus Fig. 1,
- Fig. 3: eine Ansicht auf das hintere Ende des Gehäuses des Arbeitsgeräts aus den Figuren 1 und 2,
- Fig. 4: eine schematische Schnittdarstellung eines Schnitts entlang der in Fig. 2 eingezeichneten Schnittfläche IV-IV,
- Fig. 4a: ein vergrößertes Detail aus Fig. 4,
- Fig. 5: eine schematische Seitenansicht eines als Heckenschneider ausgebildeten Arbeitsgeräts, und
- Fig. 6: eine schematische Seitenansicht eines als Trennschleifer ausgebildeten Arbeitsgeräts.

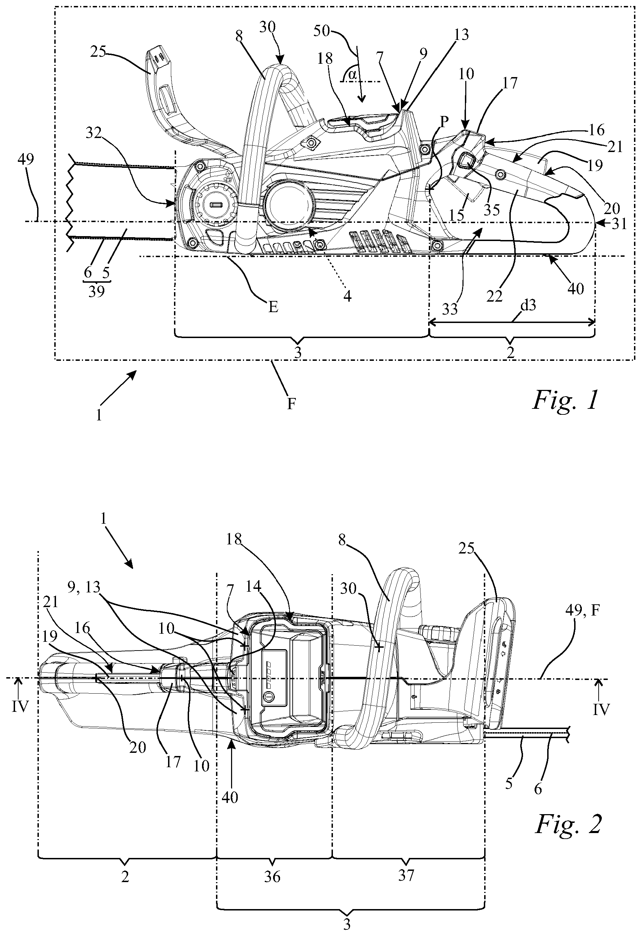

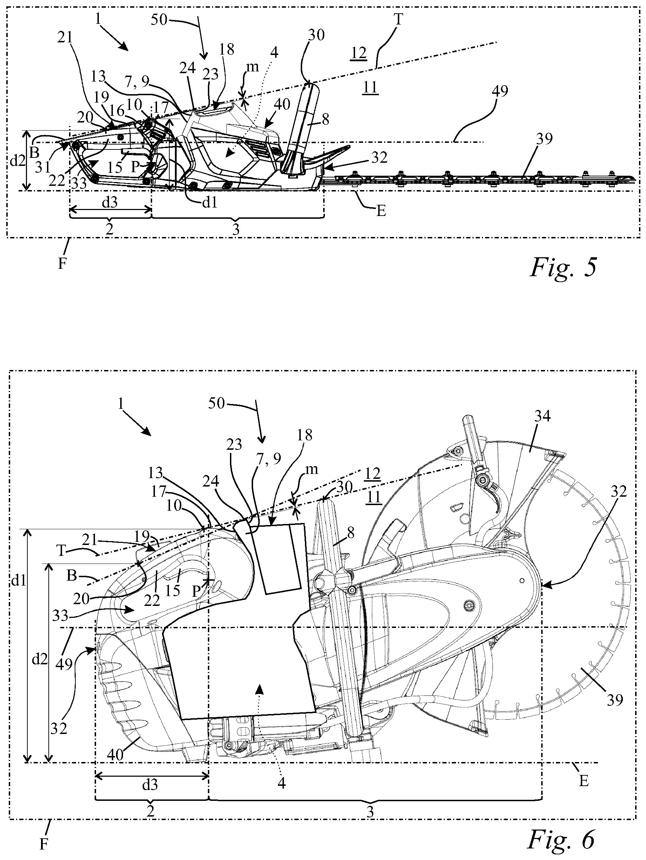

Die Fig. 1 bis 6 zeigen handgeführte Arbeitsgeräte 1. Die handgeführten Arbeitsgeräte 1 sind akkubetrieben. In den Ausführungsbeispielen nach den Fig. 1 bis 4a ist das handgeführte Arbeitsgerät 1 eine Motorkettensäge. Im Ausführungsbeispiel nach Fig. 5 ist das handgeführte Arbeitsgerät 1 eine Heckenschere. Im Ausführungsbeispiel nach Fig. 6 ist das handgeführte Arbeitsgerät 1 ein Trennschleifer. Die nachfolgende Beschreibung trifft grundsätzlich auf alle Ausführungsbeispiele zu. Sollte eine Angabe sich lediglich auf eines der drei Ausführungsbeispiele beziehen, so ist dies explizit angegeben.

Das Arbeitsgerät 1 ist im bestimmungsgemäßen Betrieb handgeführt. Das Arbeitsgerät 1 ist ein tragbares Arbeitsgerät. Der Begriff "tragbar" ist in diesem Zusammenhang so zu verstehen, dass das Arbeitsgerät im bestimmungsgemäßen Betrieb getragen werden kann. Während des Betriebs des Arbeitsgeräts 1 ist es nicht erforderlich, dass das Arbeitsgerät 1 durch eine Vorrichtung oder ein Werkstück abgestützt wird. Das Arbeitsgerät 1 kann im bestimmungsgemäßen Betrieb durch den Bediener allein getragen werden.

Das Arbeitsgerät 1 umfasst ein Gehäuse 40. Das Arbeitsgerät 1 umfasst ein Werkzeug 39. Das Werkzeug 39 ist an dem Gehäuse 40 angeordnet. Im Ausführungsbeispiel ist das Werkzeug 39 an dem Gehäuse 40 befestigt. Im Ausführungsbeispiel nach den Fig. 1 bis 4a ist das Werkzeug durch eine Führungsschiene 5 und eine Sägekette 6 gebildet. Im Ausführungsbeispiel nach Fig. 5 ist das Werkzeug 39 durch einen Messerbalken gebildet. Im Ausführungsbeispiel nach Fig. 6 ist das Werkzeug 39 durch ein Sägeblatt gebildet.

Das Arbeitsgerät 1 umfasst einen Elektromotor 4. Der Elektromotor 4 dient zum Antrieb des Werkzeugs 39. Im Ausführungsbeispiel nach den Fig. 1 bis 4a wird mittels des Elektromotors 4 die Sägekette 6 um die Führungsschiene 5 umlaufend angetrieben. Der Elektromotor 4 ist in dem Gehäuse 40 angeordnet.

Das Arbeitsgerät 1 umfasst ein Griffrohr 8. Das Griffrohr 8 umgreift das Gehäuse 40 teilweise. Es kann auch vorgesehen sein, dass das Griffrohr das Gehäuse vollständig umgreift. Das Griffrohr 8 übergreift das Gehäuse 40. Im bestimmungsgemäßen Betrieb des Arbeitsgeräts 1 kann der Bediener das Griffrohr 8 von oben umgreifen. Das Griffrohr 8 ist ein Bügelgriff.

Das Gehäuse 40 weist ein hinteres Ende 31 auf. Das hintere Ende 31 ist im Betrieb des Arbeitsgeräts 1 dem Benutzer zugewandt. Das Gehäuse 40 weist ein vorderes Ende 32 auf. Das vordere Ende 32 des Gehäuses 40 ist im bestimmungsgemäßen Betrieb des Arbeitsgeräts 1 dem Bediener abgewandt. An dem vorderen Ende 32 ist das Werkzeug 39 angeordnet. In den Ausführungsbeispielen umschließt das Gehäuse 40 einen zusammenhängenden Innenraum. Das Gehäuse 40 ist aus zwei Halbschalen ausgebildet. Die Halbschalen liegen in einer Trennebene aneinander an. Es kann aber auch vorgesehen sein, dass das Gehäuse zwei getrennt voneinander ausgebildete Innenräume umschließt. Insbesondere kann das Gehäuse ein Motorgehäuse und ein Griffgehäuse umfassen, die getrennt voneinander ausgebildet sind. In dem Motorgehäuse sind dann der Elektromotor und der Akkuschacht angeordnet. Das Motorgehäuse und das Griffgehäuse können über einen Schwingspalt und den Schwingspalt überbrückende Antivibrationselemente miteinander verbunden sein. In diesem Fall umfasst das Gehäuse vier Halbschalen.

Das Gehäuse 40 umfasst in jedem Fall einen Bedienbereich 2. Der Bedienbereich 2 ist dem hinteren Ende 31 des Gehäuses 40 zugeordnet. Im Bedienbereich 2 ist ein Bedienelement 15 angeordnet. Das Bedienelement 15 dient zur Bedienung des Elektromotors 4 des Arbeitsgeräts 1.

Wie insbesondere in den Fig. 1 und 2 dargestellt, erstreckt sich das Gehäuse 40 entlang einer Längsachse 49. Die Längsachse 49 erstreckt sich von dem hinteren Ende 31 des Gehäuses 40 zu dem vorderen Ende 32 des Gehäuses 40. Die Längsachse 49 verläuft in allen Ausführungsbeispielen parallel zu einer Werkzeugebene. In den Ausführungsbeispielen nach den Fig. 1 bis 4a verläuft die Längsachse 49 parallel zur Ebene der Führungsschiene 5. Im Ausführungsbeispiel nach Fig. 5 verläuft die Längsachse 49 parallel zur Ebene, in der sich die Messerbalken hin und her bewegen. Im Ausführungsbeispiel nach Fig. 6 verläuft die Längsachse 49 parallel zur Ebene des Sägeblatts. Die Längsachse 49 kann auch als Längsmittelachse des Gehäuses 40 bezeichnet werden.

Das Arbeitsgerät 1 ist so ausgelegt, dass es in einer dafür vorgesehenen Abstellposition auf einer Horizontalebene E abstellbar ist. Es kann vorgesehen sein, dass das Arbeitsgerät 1 eine Abstellfläche zum Abstellen des Arbeitsgeräts 1 in der Abstellposition aufweist. In den Ausführungsbeispielen weist das Arbeitsgerät 1 Abstellvorsprünge auf, auf denen es auf der Horizontalebene E abstellbar ist. In der Abstellposition ist das Arbeitsgerät 1 derart auf der Horizontalebene E abstellbar, dass das Griffrohr 8 vom Bediener von oben umgriffen werden kann. Auf diese Weise kann das Arbeitsgerät 1 schnell und einfach angehoben und aufgenommen werden. Die Horizontalebene E verläuft in der Horizontalen. In der Abstellposition verläuft die Längsachse 49 parallel zur Horizontalebene E.

Das Arbeitsgerät 1 besitzt eine Längsebene F. In der Abstellposition verläuft die Längsebene F senkrecht zur Horizontalebene E. Die Längsebene F enthält die Längsachse 49. Die Längsebene F wird auch als Längsmittelebene bezeichnet. Es kann vorgesehen sein, dass sich das Gehäuse 40 entlang der Längsebene F aus zwei Gehäusehälften zu dem Gehäuse 40 zusammengesetzt ist. In diesem Fall wird die Längsebene F als Trennebene des Gehäuses 40 oder als Teilungsebene des Gehäuses 40 bezeichnet. In den Ausführungsbeispielen nach den Fig. 1 bis 4a verläuft die Längsebene F parallel zur Ebene der Führungsschiene 5. Im Ausführungsbeispiel nach Fig. 5 verläuft die Längsebene F senkrecht zur Ebene, in der sich die Messerbalken gegeneinander bewegen. Im Ausführungsbeispiel nach Fig. 6 verläuft die Längsebene F parallel zur Ebene des Sägeblatts.

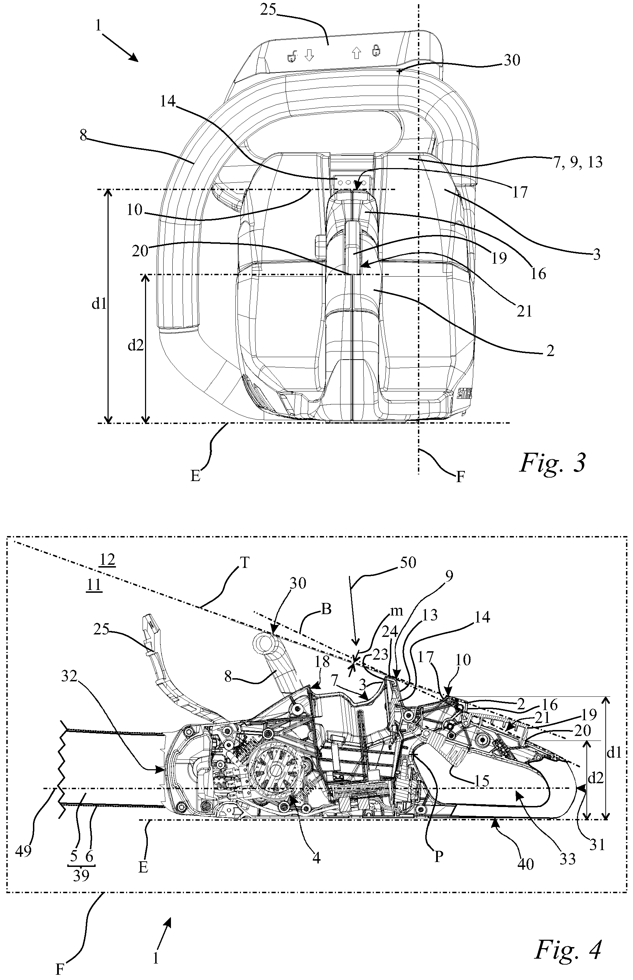

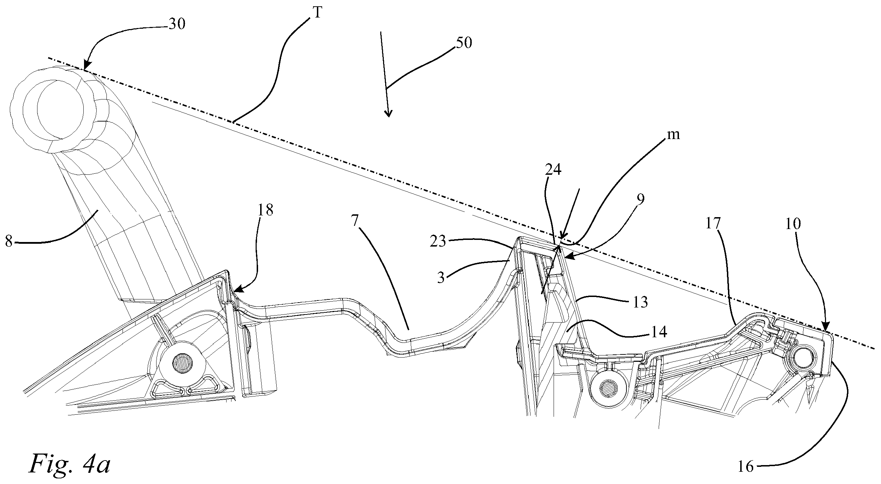

Das Gehäuse 40 weist eine Grifföffnung 33 auf. Die Grifföffnung 33 ist im Bedienbereich 2 des Gehäuses 40 angeordnet. Die Grifföffnung 33 durchdringt das Gehäuse 40 vollständig. Die Grifföffnung 33 durchdringt das Gehäuse 40 in Richtung quer zur Längsebene F. Die Grifföffnung 33 durchdringt das Gehäuse 40 im Ausführungsbeispiel in Richtung senkrecht zur Längsebene F. Die Grifföffnung 33 weist einen in den Fig. 1 und 4 dargestellten Abstandspunkt P auf. Der Abstandspunkt P ist am Rand der Grifföffnung 33 angeordnet. Der Abstandspunkt P weist den größten in Richtung der Längsachse 49 gemessenen Abstand zu dem hinteren Ende 31 des Gehäuses 40 auf. Der Abstandspunkt P ist der Punkt der Grifföffnung 33, der zu dem hinteren Ende 31 des Gehäuses 40 den größten in Richtung der Längsachse 49 gemessenen Abstand d3 aufweist.

Der Bedienbereich 2 des Gehäuses 40 erstreckt sich in Richtung der Längsachse 49 von dem hinteren Ende 31 des Gehäuses 40 bis zu dem Abstandspunkt P. In dem Bedienbereich 2 ist von dem Gehäuse 40 ein Handgriff 22 ausgebildet. Im Bedienbereich 2 kann der Handgriff 22 von dem Benutzer umgriffen werden. Hierzu kann der Benutzer die Hand durch die Grifföffnung 33 stecken.

Das Gehäuse 40 weist einen Frontbereich 3 auf. Der Frontbereich 3 ist in Richtung der Längsachse 49 zwischen dem Abstandspunkt P und dem vorderen Ende 32 des Gehäuses 40 angeordnet. In den Ausführungsbeispielen erstreckt sich der Frontbereich 3 des Gehäuses 40 in Richtung der Längsachse 49 von dem Abstandspunkt P der Grifföffnung 33 bis zu dem vorderen Ende 32 des Gehäuses 40. In den Ausführungsbeispielen ist das Gehäuse 2 ausschließlich in den Bedienbereich 2 und den Frontbereich 3 unterteilt.

Das Arbeitsgerät 1 umfasst einen Akkuschacht 7. Der Akkuschacht 7 ist durch das Gehäuse 40 ausgebildet. Der Akkuschacht 7 ist in dem Frontbereich 3 des Gehäuses 40 angeordnet. Der Akkuschacht 7 ist von einer Außenseite des Gehäuses 40 begrenzt. Das Arbeitsgerät 1 ist vorzugsweise so ausgelegt, dass der Akkuschacht 7 einen in den Akkuschacht 7 eingeführten, nicht dargestellten Akkupack bezüglich einer Umfangsrichtung um die Einführrichtung 50 umschließt, so dass lediglich eine Stirnseite des Akkupacks von außerhalb des Akkuschachts 7 sichtbar ist.

Das Gehäuse 40 besitzt eine beispielsweise in Fig. 4 dargestellte gedachte Tangentialebene T. Die gedachte Tangentialebene T tangiert das Gehäuse 40 lediglich. Die gedachte Tangentialebene T liegt an dem Gehäuse 40 lediglich an. Die gedachte Tangentialebene T schneidet das Gehäuse 40 nicht. Die gedachte Tangentialebene T verläuft senkrecht zu der Längsebene F. Die gedachte Tangentialebene T tangiert das Griffrohr 8. Das Griffrohr 8 ist kein Bestandteil des Gehäuses 40. In allen Ausführungsbeispielen tangiert die gedachte Tangentialebene T des Gehäuses 40 das Gehäuse 40 im Bedienbereich 2 des Gehäuses 40. Die gedachte Tangentialebene T schneidet das Griffrohr 8 nicht. Die gedachte Tangentialebene T liegt an dem Griffrohr 8 an.

Das Griffrohr 8 übergreift das Gehäuse 40 derart, dass das Griffrohr 8 die Längsebene F durchkreuzt, wie in Fig. 3 dargestellt. Das Griffrohr 8 wird auch als Bügelgriff bezeichnet. Das Griffrohr 8 ist im Frontbereich 3 des Gehäuses 40 angeordnet. Das Griffrohr 8 ist an dem Gehäuse 40 angeordnet, in den Ausführungsbeispielen befestigt. Das Griffrohr 8 ist mit seinen beiden Längsenden mit dem Gehäuse 40, im Ausführungsbeispiel mit dem Frontbereich 3 des Gehäuses 40 verbunden. Bezüglich der Richtung der Längsachse 49 ist der Akkuschacht 7 zwischen dem Griffrohr 8 und dem Bedienbereich 2 des Gehäuses 40 angeordnet.

Wie in Fig. 4 dargestellt, besitzt die Tangentialebene T eine erste Seite 11 und eine zweite Seite 12. Die erste Seite 11 der gedachten Tangentialebene T ist in der Abstellposition des Arbeitsgeräts 1 der Horizontalebene E zugewandt. Der Frontbereich 3 des Gehäuses 40 ist ausschließlich auf der ersten Seite 11 der gedachten Tangentialebene T angeordnet. Die gedachte Tangentialebene T schneidet den Frontbereich 3 nicht. Der Frontbereich 3 durchstößt die gedachte Tangentialebene T nicht. Der Akkuschacht 7 ist ausschließlich auf der ersten Seite 11 der gedachten Tangentialebene T angeordnet. Die gedachte Tangentialebene T schneidet den Akkuschacht 7 nicht. Der Akkuschacht 7 durchstößt die Tangentialebene T nicht.

Der Frontbereich 3 weist zu der gedachten Tangentialebene T einen Frontbereichabstand m auf, wie in Fig. 4 und in Fig. 4a beispielhaft für alle Ausführungsbeispiele eingezeichnet. Der Akkuschacht 7 weist zu der gedachten Tangentialebene T den Frontbereichabstand m auf, wie in Fig. 4 und Fig. 4a beispielhaft für alle Ausführungsbeispiele eingezeichnet. Der Frontbereichabstand m ist senkrecht zu der gedachten Tangentialebene T gemessen. Der Frontbereichabstand m entspricht dem Abstand des Frontbereichs 3 des Gehäuses 40 von der gedachten Tangentialebene T. Der Frontbereichabstand m ist so gewählt und das Arbeitsgerät 1 ist so ausgelegt, dass der Frontbereich 3 des Gehäuses 40 bei einem Aufprall des Arbeitsgeräts 1 mit der gedachten Tangentialebene T auf der Horizontalebene E die Horizontalebene E kontaktieren kann. Der Frontbereichabstand m ist im Ausführungsbeispiel so gewählt und das Arbeitsgerät 1 ist so ausgelegt, dass der Akkuschacht 7 bei einem Aufprall des Arbeitsgeräts 1 mit der gedachten Tangentialebene T auf der Horizontalebene E die Horizontalebene E kontaktieren kann. Bei einem solchen Aufprall des Arbeitsgeräts 1 mit der gedachten Tangentialebene T auf der Horizontalebene E kann sich das Arbeitsgerät 1 elastisch derart verformen, dass das Arbeitsgerät 1 an drei Stellen die Energie des Aufpralls aufnehmen kann. Zu diesen drei Stellen zählen das Griffrohr 8, der Frontbereich 3und der Bedienbereich 2 des Gehäuses 40. Die Stelle im Frontbereich 3 des Gehäuses 40 ist insbesondere der Akkuschacht 7.

Bei einem hypothetischen Aufprall des Arbeitsgeräts 1 mit der Tangentialebene T auf der Horizontalebene E wird angenommen, dass die Normalen der Tangentialebene T und der Horizontalebene E in dieselbe Richtung zeigen. Bei einem solchen hypothetischen Aufprall des Arbeitsgeräts 1 auf der Horizontalebene E kontaktiert das Arbeitsgerät 1 die Horizontalebene E zuerst mit dem Bedienbereich 2 des Gehäuses 40 und dem Griffrohr 8. Aufgrund einer elastischen Verformung des Arbeitsgeräts 1 kommt danach auch ein Kontakt zwischen dem Frontbereich 3, in den Ausführungsbeispielen zwischen dem Akkuschacht 7 und der Horizontalebene E zustande. Dann stützt sich das Arbeitsgerät 1 mit drei Stellen gegenüber der Horizontalebene E ab. Die Energie des Aufpralls kann an drei Stellen vom Arbeitsgerät 1 aufgenommen werden. Das Arbeitsgerät 1 ist so ausgelegt, dass die Lageenergie des Arbeitsgeräts 1 in einer Höhe von 1 m über der Horizontalebene E für die beschriebene elastische Verformung des Arbeitsgeräts 1 ausreicht. Um die beschriebene elastische Verformung während eines Aufpralls des Arbeitsgeräts 1 zu ermöglichen, sind die Materialien des Arbeitsgeräts 1, insbesondere die Materialien des Griffrohrs 8 und des Gehäuses 40, entsprechend gewählt und ist die Form des Arbeitsgeräts 1 entsprechend gestaltet. In den Ausführungsbeispielen ist das Gehäuse 40, insbesondere der Bedienbereich 2 des Gehäuses 40, aus Kunststoff. Das Gehäuse 40 ist aus Spritzgussteilen, in den Ausführungsbeispielen aus zwei Halbschalen, zusammengesetzt. Das Griffrohr 8 ist aus Kunststoff. Es kann auch vorgesehen sein, dass das Griffrohr einen rohrförmigen Kern aus Metall, insbesondere aus Aluminium besitzt. In diesem Fall kann das Griffrohr von Kunststoff ummantelt sein.

In einem realistischeren Aufprallszenario kommt das Arbeitsgerät 1 entweder zuerst mit dem Bedienbereich 2 des Gehäuses 40 oder mit dem Griffrohr 8 auf der Horizontalebene E auf. Anschließend findet dann eine Rotationsbewegung des Arbeitsgeräts 1 um eine Rotationsachse parallel zur Horizontalebene E statt, so dass das Arbeitsgerät 1 die Horizontalebene E dann mit dem Griffrohr 8 oder dem Bedienbereich 2 des Gehäuses 40 kontaktiert, je nachdem welcher der beiden Bereiche die Horizontalebene E nicht zuerst kontaktiert hat. Es kann auch passieren, dass das Arbeitsgerät 1 nach der Rotation bei dem ersten Kontakt des Bereichs, der die Horizontalebene E nicht zuerst kontaktiert hat, mit der Horizontalebene E, die Horizontalebene E im gleichen Zeitpunkt mit dem Bedienbereich 2 des Gehäuses 40 und dem Griffrohr 8 kontaktiert. In der Folge wird das Arbeitsgerät 1 derart elastisch verformt, dass es auch mit dem Akkuschacht 7 an der Horizontalebene E anliegt. Auch in diesem Aufprallszenario wird die Energie dann an drei Stellen in das Arbeitsgerät 1 eingeleitet.

Das Arbeitsgerät 1 weist bei der Ausführung nach den Figuren 1 bis 4 einen Handschutzbügel 25 auf. Der Handschutzbügel 25 ist nicht Bestandteil des Gehäuses 40. Der Handschutzbügel 25 ist schwenkbar am Gehäuse 40 gelagert. Der Handschutzbügel 40 kann über die gedachte Tangentialebene T hervorstehen. Bei einem Aufprall des Arbeitsgeräts 1 mit der gedachten Tangentialebene T auf die Horizontalebene kann der Handschutzbügel 25 verschwenkt werden. Durch die Ausweichbewegung des Handschutzbügels 25 bei einem solchen Aufprall ist der Handschutzbügel 25 vor einer Beschädigung geschützt. Der Handschutzbügel 25 steht im Ausführungsbeispiel nach den Fig. 1 bis 4a vorteilhaft mit einer nicht dargestellten Bremse des Elektromotors 4 der Arbeitsgeräts 1 in Wirkverbindung.

Im Ausführungsbeispiel nach Fig. 6 weist das Arbeitsgerät 1 eine Schutzhaube 34 auf. Die Schutzhaube 34 umgibt das Werkzeug 39 zumindest teilweise. Dadurch ist der Bediener vor dem Werkzeug 39 und vor geschnittenem Material geschützt. Die Schutzhaube 34 ist nicht Bestandteil des Gehäuses 40. In der schematischen Darstellung nach Fig. 6 steht die Schutzhaube 34 über die Tangentialebene T hervor. Tatsächlich ist die Schutzhaube aber nur auf der ersten Seite 11 der gedachten Tangentialebene angeordnet.

Wie insbesondere in Fig. 4 und Fig. 4a dargestellt, tangiert die erste Tangentialebene T den Bedienbereich 2 des Gehäuses 40 in der Abstellposition in einer Seitenansicht senkrecht auf die Längsebene F bei allen Ausführungsbeispielen in einem Berührpunkt 10. Der Berührpunkt 10 besitzt zu der Horizontalebene E den Abstand d1. Der insbesondere in Fig. 4a dargestellte Frontbereichabstand m ist kleiner als 10% des beispielsweise in Fig. 4 dargestellten Abstands d1 des Berührpunkts 10 zu der Horizontalebene E. Insbesondere ist der Frontbereichabstand m kleiner als 3% des Abstands d1 des Berührpunkts 10 zu der Horizontalebene E. In den Ausführungsbeispielen ist der Frontbereichabstand m kleiner als 3% des Abstands d1 des Berührpunkts 10 zu der Horizontalebene E. Es kann auch vorgesehen sein, dass der Frontbereichabstand m 0% des Abstands d1 des Berührpunkts 10 zu der Horizontalebene E beträgt. In diesem Fall tangiert die gedachte Tangentialebene T den Bedienbereich 3. In den Ausführungsbeispielen tangiert die gedachte Tangentialebene T den Akkuschacht 7.

Das Gehäuse 40 besitzt einen Aufprallvorsprung 9. Der Aufprallvorsprung 9 des Gehäuses 40 ist im Frontbereich 3 des Gehäuses 40 angeordnet. Der Aufprallvorsprung 9 ist von dem Frontbereich 3 des Gehäuses 40 ausgebildet. Der Aufprallvorsprung 9 steht in Richtung auf die gedachte Tangentialebene T hervor. Der Aufprallvorsprung 9 ist ein Vorsprung des Frontbereichs 3 des Gehäuses 40. Der Aufprallvorsprung 9 ist bezüglich der Richtung der Längsachse 49 beidseitig von Bereichen des Gehäuses 40 begrenzt, die einen größeren Abstand zu der Tangentialebene T aufweisen als der Aufprallvorsprung 9. Der Frontbereich 3 weist im Bereich des Aufprallvorsprungs 9 den kleinsten Abstand zur gedachten Tangentialebene T auf. Der Frontbereich 3 weist im Bereich des Aufprallvorsprungs 9 den Frontbereichabstand m zur Tangentialebene T auf. Der Aufprallvorsprung 9 besitzt zur gedachten Tangentialebene T den Frontbereichabstand m. Der Aufprallvorsprung 9 ist ausschließlich auf der ersten Seite 11 der gedachten Tangentialebene T angeordnet. Der Aufprallvorsprung 9 besitzt eine Aufprallfläche 24. Die Aufprallfläche 24 verläuft in den Ausführungsbeispielen parallel zu der gedachten Tangentialebene T. Bei einem Aufprall des Arbeitsgeräts 1 mit der Tangentialebene T auf die Horizontalebene E kann der Aufprallvorsprung 9 mit der Aufprallfläche 24 zumindest kurzzeitig flächig an der Horizontalebene E anliegen und sich so abstützen. Dabei kann Energie in das Gehäuse 40 eingeleitet werden.

Der Aufprallvorsprung 9 ist bezüglich der Richtung der Längsachse 49 zwischen dem Griffrohr 8 und dem Bedienbereich 2 des Gehäuses 40 angeordnet. Der Aufprallvorsprung 9 ist bezüglich der Richtung der Längsachse 49 näher zu dem Bedienbereich 2 des Gehäuses 2 als zu dem Griffrohr 8 angeordnet. Die gedachte Tangentialebene T liegt in einem Anlagepunkt 30 an dem Griffrohr 8 an. Die gedachte Tangentialebene T tangiert das Griffrohr 8 in dem Anlagepunkt 30. Bezüglich der Richtung der Längsachse 49 ist der Aufprallvorsprung 9 näher an dem Bedienbereich 2 des Gehäuses 40 als an dem Anlagepunkt 30 des Griffrohrs 8 angeordnet. Ein in Richtung der Längsachse 49 gemessener Abstand zwischen dem Aufprallvorsprung 9 und dem Anlagepunkt 30 der Tangentialebene T an dem Griffrohr 8 ist mindestens doppelt so groß wie der in Richtung der Längsachse 49 gemessene Abstand zwischen dem Aufprallvorsprung 9 und dem Abstandspunkt P der Grifföffnung 33.

Der Frontbereich 3 lässt sich bezüglich der Richtung der Längsachse 49 in einen Akkubereich 36 und einen Bügelbereich 37 unterteilen, wie beispielhaft für alle Ausführungsbeispiele in Fig. 2 dargestellt. Der Bügelbereich 37 ist dem vorderen Ende 32 des Gehäuses 40 zugeordnet. Der Akkubereich 36 ist bezüglich der Richtung der Längsachse 49 zwischen dem Bügelbereich 37 und dem Bedienbereich 2 angeordnet. Der Akkubereich 36 grenzt an den Bedienbereich 2 an. Der Akkubereich 36 grenzt an den Bügelbereich 37 an. Das Griffrohr 8 ist in den Ausführungsbeispielen vollständig im Bügelbereich 37 angeordnet. Im Bügelbereich 37 ist das Griffrohr 8 mit dem Gehäuse 40 verbunden. Der Akkuschacht 7 ist in den Ausführungsbeispielen vollständig im Akkubereich 36 angeordnet.

Der Bedienbereich 2 erstreckt sich von 35% bis 45% der in Richtung der Längsachse 49 gemessenen Gesamterstreckung des Gehäuses 40. Der Frontbereich 3 erstreckt sich von 55% bis 65% der in Richtung der Längsachse 49 gemessenen Gesamterstreckung des Gehäuses 40. Der Akkubereich 36 erstreckt sich von 20% bis 30% der in Richtung der Längsachse 49 gemessenen Gesamterstreckung des Gehäuses 40. Der Bügelbereich 37 erstreckt sich von 30% bis 40% der in Richtung der Längsachse 49 gemessenen Gesamterstreckung des Gehäuses 40.

Der Anlagepunkt 30 des Griffrohrs 30 an der Tangentialebene T ist im Bügelbereich 37 angeordnet. Der Berührpunkt 10 ist im Bedienbereich 2 angeordnet. Die in Fig. 4a dargestellte Aufprallfläche 24 ist im Akkubereich 36 angeordnet.

Bei dem beschriebenen Aufprall liegt das Arbeitsgerät 1 zunächst im Bügelbereich 37 mit dem Berührpunkt 30 (der auch eine entlang einer Achse ausgedehnte Stelle sein kann) des Griffrohrs 8 und im Bedienbereich 2 mit dem Berührpunkt 10 (der auch eine entlang einer Achse ausgedehnte Stelle sein kann) an der Horizontalebene E an (Fig. 4). Nach der elastischen Verformung des Arbeitsgeräts 1 liegt das Arbeitsgerät 1 zusätzlich im Akkubereich 36 mit der in Fig. 4a dargestellten Aufprallfläche 24 an der Horizontalebene E an. Bei diesem Aufprall bilden der Berührpunkt 10, die Aufprallfläche 24 und der Anlagepunkt 30 Stützpunkte bzw. Stützstellen für die Einleitung von Energie in das Arbeitsgerät 1.

Der Aufprallvorsprung 9 ist Teil des Akkuschachts 7. Der Akkuschacht 7 ist so ausgebildet, dass er den darin einführbaren Akku umschließen kann. Der Aufprallvorsprung 9 begrenzt den Akkuschacht 7. Der Aufprallvorsprung 9 ist von einem Rand des Akkuschachts 7 gebildet. Der Aufprallvorsprung 9 ist Teil eines geschlossen um die Einführrichtung 50 des Akkuschachts 7 umlaufenden Rands des Akkuschachts 7. Der Aufprallvorsprung 9 bildet eine Außenwand 13 des Akkuschachts 7. Der Aufprallvorsprung 9 ist zwischen einer Innenwand 23 und einer Außenwand 13 des Akkuschachts 7 angeordnet. Die Innenwand 23 des Akkuschacht ist zur Anlage an einen in den Akkuschacht 7 einführbaren Akku bestimmt. Die Aufprallfläche 24 erstreckt sich zwischen der Innenwand 23 und der Außenwand 13. Der Aufprallvorsprung 9 besitzt zu der Horizontalebene E einen größeren Abstand als der Berührpunkt 10 zwischen der Tangentialebene T und dem Bedienbereich 2 des Gehäuses 40. Der Aufprallvorsprung 9 besitzt zu der Horizontalebene E einen kleineren Abstand als der Anlagepunkt 30 der Tangentialebene T an dem Griffrohr 8. Die gedachte Tangentialebene T ist in der Abstellposition des Arbeitsgeräts 1 in Richtung von dem vorderen Ende 32 des Gehäuses 40 zu dem hinteren Ende 31 zu der Horizontalebene E hin geneigt.

Im Ausführungsbeispiel nach den Fig. 1 bis 4a umfasst der Frontbereich 3 des Gehäuses 40 eine Haube 36. Die Haube 36 bildet den Akkuschacht 7 zumindest teilweise. Der Aufprallvorsprung 9 ist durch die Haube 36 gebildet. Die Haube 36 umfasst zwei Halbschalen. Die beiden Halbschalen sind entlang einer Trennebene zusammengesetzt.

Das Arbeitsgerät 1 umfasst ein Betätigungselement 14. Das Betätigungselement 14 dient zum Auswerfen eines Akkus aus dem Akkuschacht 7. Das Arbeitsgerät 1 ist so gestaltet, dass das Betätigungselement 14 beim Aufprall des Arbeitsgeräts 1 durch den Aufprallvorsprung 9 geschützt ist. Dies ist insbesondere in den Fig. 3 und 4 ersichtlich. Wie in Fig. 3 erkennbar, ist der Berührpunkt 10 in den Ausführungsbeispielen eine Berührstelle, die sich entlang einer Geraden erstreckt. Lediglich in einer Seitenansicht senkrecht auf die Längsebene F ist diese Berührstelle ein Berührpunkt. In analoger Weise erstreckt sich der Aufprallvorsprung 9 entlang einer Geraden. Im Ausführungsbeispiel nach Fig. 3 ist das Betätigungselement 14 zum Auswerfen des Akkus aus dem Akkuschacht 7 zwischen zwei Vorsprüngen, die den Aufprallvorsprung 9 bilden, angeordnet. Dadurch liegt das Betätigungselement 14 geschützt. Zusätzlich ist der Abstand des Betätigungselements 14 zur gedachten Tangentialebene T größer als der Abstand des Aufprallvorsprungs 9 zu der gedachten Tangentialebene T. Dies ist in Fig. 4 dargestellt.

Das Arbeitsgerät 1 umfasst einen Handanschlag 16. Der Handanschlag 16 ist von dem Bedienbereich 2 des Gehäuses 40 ausgebildet. Der Handanschlag 16 dient zur Anlage der Hand eines Benutzers bei Betätigung des Bedienelements 15. Der Handanschlag 16 verhindert eine Bewegung der Hand eines Benutzers in Richtung von dem hinteren Ende 31 zu dem vorderen Ende 32 des Gehäuses 40 relativ zu dem Gehäuse 40 bei Bedienung des Bedienelements 15. Die gedachte Tangentialebene T tangiert den Bedienbereich 2 an dem Handanschlag 16.

Im Ausführungsbeispiel ist der Handanschlag 16 als Vorsprung 17 des Bedienbereichs 2 des Gehäuses 40 ausgebildet. Der Vorsprung 17 des Bedienbereichs 2 steht in Richtung auf die Tangentialebene T vor. Der Vorsprung 17 ist bezüglich der Richtung der Längsachse 49 beidseitig von Bereichen des Gehäuses 40 begrenzt, die einen größeren Abstand zu der Tangentialebene T aufweisen als der Vorsprung 17. Der Vorsprung 17 ist höckerförmig ausgebildet. Bezüglich der Richtung der Längsachse 49 zwischen dem Vorsprung 17 des Bedienbereichs 2 und dem Aufprallvorsprung 9 des Frontbereichs 3 ist in Bezug auf die gedachte Tangentialebene T eine Vertiefung des Arbeitsgeräts 1, in den Ausführungsbeispielen des Gehäuses 40 ausgebildet.

In den Akkuschacht 7 ist ein Akku in einer Einführrichtung 50 einführbar. Der Akku wird auch als Akkupack bezeichnet. Die Einführrichtung 50 verläuft in der Abstellposition quer zur Horizontalebene E. Die Einführrichtung 50 verläuft parallel zur Längsebene F. Es kann alternativ auch vorgesehen sein, dass die Einführrichtung quer, insbesondere senkrecht zur Längsebene F verläuft.

Der Akkuschacht 7 weist eine Einführöffnung 18 auf. Durch die Einführöffnung 18 kann der Akku in den Akkuschacht 7 eingeführt werden. Die Einführöffnung 18 ist in der Abstellposition auf der der Horizontalebene E abgewandten Seite des Arbeitsgeräts 1 angeordnet. Die Einführöffnung 18 öffnet den Akkuschacht 7 in Richtung weg von der Horizontalebene E. Die Einführöffnung 18 besitzt einen geschlossen um die Einführrichtung 50 umlaufenden Rand. Um den Akku in den Akkuschacht 7 einzuführen, muss der Akku durch die Einführöffnung 18, insbesondere durch den geschlossen umlaufenden Rand hindurchgeführt werden. Dadurch ist der Akku sicher und geschützt gelagert.

Vorteilhaft ist die Einführrichtung 50 in der Abstellposition in einem Winkel α von 80° bis 90° gegen die Horizontalebene E geneigt, wie in Fig. 1 dargestellt. Es kann auch vorgesehen sein, dass die Einführrichtung 50 senkrecht auf die Horizontalebene E steht. Im Ausführungsbeispiel verläuft die Einführrichtung 50 in der Abstellposition auf die Horizontalebene E zu. In Richtung auf die Horizontalebene E zu ist die Einführrichtung 50 im Ausführungsbeispiel zu dem hinteren Ende 32 hingeneigt. Es kann aber auch vorgesehen sein, dass die Einführrichtung in Richtung auf die Horizontalebene E zu von dem hinteren Ende 33 weggeneigt ist.

Wie in den Fig. 1, 4, 5 und 6 dargestellt, weist das Arbeitsgerät 1 ein weiteres Bedienelement 19 auf. Das Arbeitsgerät 1 weist ein beispielhaft für alle Ausführungsbeispiele in Fig. 1 dargestelltes Sperrelement 35 auf. Das Sperrelement 35 dient zur Sperrung des Bedienelements 15 zur Bedienung des Elektromotors 4. Das Arbeitsgerät 1 ist vorteilhaft so ausgelegt, dass das Bedienelement 15 nur betätigt werden kann, wenn das Sperrelement 35 in einer Entsperrposition ist. Das Sperrelement 35 kann vom Bediener in die Entsperrposition gedrückt werden. Hierbei muss eine Federkraft überwunden werden. Damit der Bediener das Sperrelement 35 nicht permanent in die Entsperrposition gedrückt halten muss, ist das weitere Bedienelement 19 vorgesehen. Das weitere Bedienelement 19 ist in den Ausführungsbeispielen ein Halteelement. Mit dem Halteelement kann das Sperrelement 35 komfortabel in der Entsperrposition gehalten werden. Bei betätigtem Halteelement ist ein Drücken des Sperrelements 35 in die Entsperrposition nicht mehr dauerhaft, sondern nur initial erforderlich. Nach initialem Drücken des Sperrelements 35 in die Entsperrposition kann das Sperrelement 35 mittels (permanenter) Betätigung des Halteelements in der Entsperrposition, vorzugsweise mechanisch, gehalten werden.

Es kann auch vorgesehen sein, dass das weitere Bedienelement 19 ein Sperrelement ist. Vorzugsweise steht das weitere Bedienelement 19 in der Abstellposition in Richtung weg von der Horizontalebene E aus dem Bedienbereich 2 des Gehäuses 40 hervor. Das weitere Bedienelement ist kein Bestandteil des Gehäuses 40.

Das weitere Bedienelement 19 ist im Bedienbereich 2 des Gehäuses 40 angeordnet. Das Arbeitsgerät 1 umfasst eine Bedienelementöffnung 21. Die Bedienelementöffnung 21 ist im Gehäuse 40 angeordnet. Die Bedienelementöffnung 21 durchdringt eine Außenwand des Gehäuses 40 vollständig. Die Bedienelementöffnung 21 ist im Bedienbereich 2 des Gehäuses 40 angeordnet. Die Bedienelementöffnung 21 ist in der Abstellposition auf der der Horizontalebene E abgewandten Seite des Arbeitsgeräts 1 angeordnet. Das weitere Bedienelement 19 ragt aus der Bedienelementöffnung 21 hervor.

Der Berührpunkt 10 des Bedienbereichs 2 mit der gedachten Tangentialebene T liegt bezüglich der Richtung der Längsachse 49 zwischen dem weiteren Bedienelement 19 und dem Frontbereich 3.

Der Berührpunkt 10 des Bedienbereichs 2 mit der gedachten Tangentialebene T liegt bezüglich der Richtung der Längsachse 49 zwischen der Bedienelementöffnung 21 und dem Frontbereich 3.

Die Bedienelementöffnung 21 weist in einer Seitenansicht senkrecht auf die Längsebene F einen Tiefpunkt 20 auf, wie beispielsweise in Fig. 4 dargestellt. Der Tiefpunkt 20 ist in der Seitenansicht senkrecht auf die Längsebene F der Punkt der Bedienelementöffnung 21 mit dem kleinsten Abstand d2 zu der Horizontalebene E. Wie aus Fig. 3 ersichtlich, ist der Tiefpunkt 20 lediglich in der Seitenansicht senkrecht auf die Längsebene F punktförmig. Tatsächlich handelt es sich bei dem Tiefpunkt 20 um eine Tiefstelle, die sich entlang einer Geraden erstreckt. Wie in Fig. 4 dargestellt, verläuft eine gedachte Berührebene B senkrecht zur Längsebene F. Die gedachte Berührebene B verläuft durch den Tiefpunkt 20. Die gedachte Berührebene B tangiert den Akkuschacht 7. Im Gegensatz zur gedachten Tangentialebene T schneidet die gedachte Berührebene B das Gehäuse 40. Der Handanschlag 16 steht über die gedachte Berührebene B hervor.

Die gedachte Berührebene B schneidet den Handanschlag 16.

Die Bedienelementöffnung 21 ist in der Abstellposition auf der der Horizontalebene E abgewandten Seite des Griffgehäuses 2 angeordnet. Im Ausführungsbeispiel ist das weitere Bedienelement 19 als Hebel ausgebildet. Das weitere Bedienelement 19 ist im Ausführungsbeispiel mit einer Feder vorgespannt. Die Vorspannung des weiteren Bedienelements 19 wirkt in der Abstellposition des Arbeitsgeräts 1 in Richtung weg von der Horizontalebene E.

Die gedachte Berührebene B tangiert die Außenwand 13 des Akkuschachts 7. Die Berührebene B tangiert den Aufprallvorsprung 9.

Die Berührebene B schneidet den Vorsprung 17. Der Handanschlag 16 ist an dem Vorsprung 17 ausgebildet. Der Handanschlag 16 ist bezüglich der Richtung der Längsachse 49 zwischen dem Tiefpunkt 20 und dem Akkuschacht 7 angeordnet. Der Handanschlag 16 ist bezüglich der Richtung der Längsachse 49 zwischen der Außenwand 13 des Akkuschachts 7 und dem Tiefpunkt 20 angeordnet. Der Handanschlag 16 ist bezüglich der Richtung der Längsachse 49 zwischen dem Aufprallvorsprung 9 und dem Tiefpunkt 20 angeordnet.

In den Ansichten nach den Fig. 5 und 6 ist kein Betätigungselement 14 erkennbar. Analog zum Ausführungsbeispiel nach den Fig. 1 bis 4 ist aber ein Betätigungselement 14 vorhanden.

Im Ausführungsbeispiel nach Fig. 6 ist kein Handanschlag gezeigt. Analog zu den Ausführungsbeispielen nach den Fig. 1 bis 5 kann aber auch bei dem Trennschleifer nach Fig. 6 ein Handanschlag vorgesehen sein. In Fig. 6 ist aber eine Vorsprung 17 gezeigt, an dem die Tangentialebene T anliegt. Die Berührebene B schneidet den Vorsprung 17.

## Patentansprüche

1. Handgeführtes, akkubetriebenes Arbeitsgerät, wobei das Arbeitsgerät (1) insbesondere eine Motorkettensäge, eine Heckenschere oder ein Trennschleifer ist, wobei das Arbeitsgerät (1) ein Gehäuse (40) und ein daran angeordnetes Werkzeug (39) aufweist, wobei das Arbeitsgerät (1) einen Akkuschacht (7) umfasst, wobei in den Akkuschacht (7) in einer Einführrichtung (50) ein Akku einführbar ist, wobei das Arbeitsgerät (1) ein Griffrohr (8) umfasst, das das Gehäuse (40) zumindest teilweise umgreift, insbesondere übergreift, wobei das Gehäuse (40) ein hinteres Ende (31) aufweist, dem ein Bedienbereich (2) des Gehäuses (40) zugeordnet ist, wobei das Gehäuse (40) ein vorderes Ende (32) aufweist, an dem das Werkzeug (39) angeordnet ist, wobei sich das Gehäuse (40) entlang einer Längsachse (49) von dem hinteren Ende (31) zu dem vorderen Ende (32) erstreckt, wobei im Bedienbereich (2) ein Bedienelement (15) zur Bedienung eines Elektromotors (4) des Arbeitsgeräts (1) angeordnet ist, wobei das Arbeitsgerät (1) so ausgelegt ist, dass es in einer dafür vorgesehenen Abstellposition auf einer Horizontalebene (E) abstellbar ist, wobei die Einführrichtung (50) in der Abstellposition quer zu der Horizontalebene (E) verläuft, wobei das Arbeitsgerät (1) eine Längsebene (F) besitzt, die in der Abstellposition senkrecht zur Horizontalebene (E) verläuft und die Längsachse (49) enthält, wobei der Bedienbereich (2) eine das Gehäuse (40) in Richtung quer zur Längsebene (F) vollständig durchdringende Grifföffnung (33) aufweist, wobei die Grifföffnung (33) in Richtung der Längsachse (49) einen Abstandspunkt (P) mit dem in Richtung der Längsachse (49) gemessenen größten Abstand zu dem hinteren Ende (31) des Gehäuses (40) aufweist, wobei sich der Bedienbereich (2) des Gehäuses (40) in Richtung der Längsachse (49) von dem hinteren Ende (31) des Gehäuses (40) bis zu dem Abstandspunkt (P) erstreckt, wobei das Gehäuse (40) einen Frontbereich (3) aufweist, wobei sich der Frontbereich (3) in Richtung der Längsachse (49) von dem Abstandspunkt (P) bis zu dem vorderen Ende (32) des Gehäuses (40) erstreckt, wobei das Gehäuse (40) eine gedachte Tangentialebene (T) besitzt, die das Gehäuse (40) lediglich tangiert, wobei die gedachte Tangentialebene (T) senkrecht zu der Längsebene (F) verläuft, wobei die gedachte Tangentialebene (T) das Griffrohr (8) tangiert,
**dadurch gekennzeichnet, dass** sich der Frontbereich (3) bezüglich der Richtung der Längsachse (49) in einen Akkubereich (36) und einen dem vorderen Ende (32) des Gehäuses (40) zugeordnet Bügelbereich (37) unterteilen lässt, dass der Akkubereich (36) bezüglich der Richtung der Längsachse (49) zwischen dem Bügelbereich (37) und dem Bedienbereich (2) angeordnet ist, dass der Akkubereich (36) an den Bedienbereich (2) angrenzt, dass der Akkuschacht (7) vollständig im Akkubereich (36) angeordnet ist, und dass die gedachte Tangentialebene (T) das Gehäuse (40) im Bedienbereich (2) des Gehäuses (40)tangiert.

2. Arbeitsgerät nach Anspruch 1,
**dadurch gekennzeichnet, dass** die Tangentialebene (T) eine erste Seite (11) und eine zweite Seite (12) besitzt, dass die erste Seite (11) in der Abstellposition der Horizontalebene (E) zugewandt ist, und dass der Frontbereich (3) des Gehäuses (40) ausschließlich auf der ersten Seite (11) der gedachten Tangentialebene (T) angeordnet ist.

3. Arbeitsgerät nach Anspruch 1 oder 2,
**dadurch gekennzeichnet, dass** der Frontbereich (3) zu der gedachten Tangentialebene (T) einen Frontbereichabstand (m) aufweist, dass der Frontbereichabstand (m) so klein gewählt ist und dass das Arbeitsgerät (1) so ausgelegt ist, dass der Frontbereich (3) des Gehäuses (40) bei einem Aufprall des Arbeitsgeräts (1) mit der gedachten Tangentialebene (T) auf der Horizontalebene (E), die Horizontalebene (E) kontaktieren kann und dass sich das Arbeitsgerät (1) hierbei elastisch derart verformen kann, dass das Arbeitsgerät (1) an drei Stellen, nämlich an dem Griffrohr (8), an dem Frontbereich (3) und an dem Bedienbereich (2) die Energie des Aufpralls aufnehmen kann.

4. Arbeitsgerät nach Anspruch 3,
**dadurch gekennzeichnet, dass** die gedachte Tangentialebene (T) das Gehäuse (40) in einem Berührpunkt (10) tangiert, dass der Frontbereichabstand (m) in der Abstellposition kleiner als 10%, insbesondere kleiner als 5%, insbesondere kleiner als 3%, insbesondere 0% des Abstands (d1) des Berührpunkts (10) zu der Horizontalebene (E) ist.

5. Arbeitsgerät nach einem der Ansprüche 1 bis 4,
**dadurch gekennzeichnet, dass** der Frontbereich (3) des Gehäuses (40) einen Aufprallvorsprung (9) besitzt, dass der Aufprallvorsprung (9) in Richtung auf die Tangentialebene (T) hervorsteht, und dass der Frontbereich (3) im Bereich des Aufprallvorsprungs (9) den kleinsten Abstand zur Tangentialebene (T) aufweist.

6. Arbeitsgerät nach einem der Ansprüche 1 bis 5,
**dadurch gekennzeichnet, dass** der Akkuschacht (7) so in dem Frontbereich (3) des Gehäuses (40) angeordnet ist, dass das Gehäuse (40) den Akku umschließen kann.

7. Arbeitsgerät nach den Ansprüchen 5 und 6,
**dadurch gekennzeichnet, dass** der Aufprallvorsprung (9) Teil des Akkuschachts (7) ist, insbesondere dass der Aufprallvorsprung (9) eine Außenwand (13) des Akkuschachts (7) bildet.

8. Arbeitsgerät nach Anspruch 6 oder 7,
**dadurch gekennzeichnet, dass** die Einführrichtung (50) parallel zur Längsebene (F) verläuft, und insbesondere dass der Akkuschacht (7) eine Einführöffnung (18) aufweist, die in der Abstellposition auf der der Horizontalebene abgewandten Seite des Arbeitsgeräts (1) angeordnet ist.

9. Arbeitsgerät nach einem der Ansprüche 1 bis 8,
**dadurch gekennzeichnet, dass** der Bedienbereich (2) einen Handanschlag (16) zur Anlage der Hand bei Betätigung des Bedienelements (15) aufweist, und dass die gedachte Tangentialebene (T) den Bedienbereich (2) an dem Handanschlag (16) tangiert, und insbesondere dass der Handanschlag (16) als Vorsprung (17) des Bedienbereichs (2) ausgebildet ist, insbesondere dass der Handanschlag (16) im Wesentlichen höckerförmig ist.

10. Arbeitsgerät nach einem der Ansprüche 1 bis 9,
**dadurch gekennzeichnet, dass** die gedachte Tangentialebene (T) das Gehäuse (40) in einem Berührpunkt (10) tangiert, dass das Arbeitsgerät (1) im Bedienbereich (2) ein weiteres Bedienelement (19) aufweist, wobei das weitere Bedienelement (19) zum Entsperren des Bedienelements (15) oder zum Halten eines Sperrelements (35) in einer Entsperrposition dient, und dass der Berührpunkt (10) bezüglich der Richtung der Längsachse (49) zwischen dem weiteren Bedienelement (19) und dem Frontbereich (3) liegt.

11. Handgeführtes, akkubetriebenes Arbeitsgerät, wobei das Arbeitsgerät (1) insbesondere eine Motorkettensäge, eine Heckenschere oder ein Trennschleifer ist, wobei das Arbeitsgerät (1) ein Gehäuse (40) und ein daran befestigtes Werkzeug (39) aufweist, wobei das Gehäuse (40) ein hinteres Ende (31) aufweist, dem ein Bedienbereich (2) des Gehäuses (40) zugeordnet ist, wobei das Gehäuse (40) ein vorderes Ende (32) aufweist, an dem das Werkzeug (39) angeordnet ist, wobei sich das Gehäuse (40) entlang einer Längsachse (49) von dem hinteren Ende (31) zu dem vorderen Ende (32) erstreckt, wobei im Bedienbereich (2) ein Bedienelement (15) zur Bedienung eines Elektromotors (4) des Arbeitsgeräts (1) angeordnet ist, wobei das Arbeitsgerät (1) so ausgelegt ist, dass es in einer dafür vorgesehenen Abstellposition auf einer Horizontalebene (E) abstellbar ist, wobei das Arbeitsgerät (1) eine Längsebene (F) besitzt, die in der Abstellposition senkrecht zur Horizontalebene (E) verläuft und die Längsachse (49) enthält, wobei das Gehäuse (40) einen Akkuschacht (7) aufweist, wobei in dem Bedienbereich (2) des Gehäuses (40) ein weiteres Bedienelement (19) vorgesehen ist, wobei das weitere Bedienelement (19) aus einer Bedienelementöffnung (21) im Bedienbereich (2) in der Abstellposition in Richtung weg von der Horizontalebene (E) hervorragt, wobei durch das Gehäuse (40) im Bedienbereich (2) ein Handanschlag (16) zur Anlage der Hand bei Betätigung des Bedienelements (15) ausgebildet ist, wobei in der Abstellposition die Bedienelementöffnung (21) in einer Seitenansicht senkrecht auf die Längsebene (F) einen Tiefpunkt (20) aufweist, der dem Punkt der Bedienelementöffnung (21) mit dem kleinsten Abstand (d2) zu der Horizontalebene (E) entspricht, wobei eine gedachte Berührebene (B) senkrecht zur Längsebene (F) durch den Tiefpunkt (20) verläuft und den Akkuschacht (7) tangiert,
**dadurch gekennzeichnet, dass** der Handanschlag (16) über die gedachte Berührebene (B) hervorsteht, und dass die gedachte Berührebene (B) den Handanschlag (16) schneidet.

12. Arbeitsgerät nach Anspruch 11,
**dadurch gekennzeichnet, dass** die Bedienelementöffnung (21) in der Abstellposition auf der der Horizontalebene (E) abgewandten Seite des Bedienbereichs (2) angeordnet ist.

13. Arbeitsgerät nach Anspruch 11 oder 12,
**dadurch gekennzeichnet, dass** der Akkuschacht (7) eine Außenwand (13) aufweist, die von der gedachten Berührebene (B) tangiert wird.

14. Arbeitsgerät nach einem der Ansprüche 11 bis 13,
**dadurch gekennzeichnet, dass** der Handanschlag (16) als Vorsprung (17) des Bedienbereichs (2) des Gehäuses (40) ausgebildet ist, insbesondere dass der Handanschlag (16) im Wesentlichen höckerförmig ist.

15. Arbeitsgerät nach einem der Ansprüche 11 bis 14,
**dadurch gekennzeichnet, dass** ein Akku in einer Einführrichtung (50) in den Akkuschacht (7) einführbar ist, und dass die Einführrichtung (50) parallel zur Längsebene (F) verläuft, insbesondere dass der Akkuschacht (7) eine Einführöffnung (18) aufweist, und insbesondere dass die Einführöffnung (18) in der Abstellposition auf der der Horizontalebene (E) abgewandten Seite des Arbeitsgeräts (1) angeordnet ist.

## Claims

1. Hand-held, battery-powered working device, wherein the working device (1) is in particular a motor chain saw, a hedge trimmer or a cut-off grinder, wherein the working device (1) comprises a housing (40) and a tool (39) arranged thereon, wherein the working device (1) comprises a battery receptacle (7), wherein a battery can be inserted into the battery receptacle (7) in an insertion direction (50), wherein the working device (1) comprises a handle tube (8) which at least partially surrounds, in particular overlaps, the housing (40), wherein the housing (40) has a rear end (31) to which an operating region (2) of the housing (40) is assigned, wherein the housing (40) has a front end (32) at which the tool (39) is arranged, wherein the housing (40) extends along a longitudinal axis (49) from the rear end (31) to the front end (32), wherein in the operating region (2) an operating element (15) for operating an electric motor (4) of the working device (1) is arranged, wherein the working device (1) is designed such that it can be set down on a horizontal plane (E) in a provided setting-down position, wherein the insertion direction (50) extends transversely to the horizontal plane (E) in the setting-down position, wherein the working device (1) has a longitudinal plane (F) which extends perpendicular to the horizontal plane (E) in the setting-down position and contains the longitudinal axis (49), wherein the operating region (2) has a grip opening (33) completely penetrating the housing (40) in a direction transverse to the longitudinal plane (F), wherein the grip opening (33) has, in the direction of the longitudinal axis (49), a distance point (P) having the greatest distance measured in the direction of the longitudinal axis (49) from the rear end (31) of the housing (40), wherein the operating region (2) of the housing (40) extends in the direction of the longitudinal axis (49) from the rear end (31) of the housing (40) to the distance point (P), wherein the housing (40) has a front region (3), wherein the front region (3) extends in the direction of the longitudinal axis (49) from the distance point (P) to the front end (32) of the housing (40), wherein the housing (40) has an imaginary tangential plane (T) which only tangentially contacts the housing (40), wherein the imaginary tangential plane (T) extends perpendicular to the longitudinal plane (F), wherein the imaginary tangential plane (T) tangentially contacts the handle tube (8),
**characterized in that** the front region (3) can be subdivided with respect to the direction of the longitudinal axis (49) into a battery region (36) and a bar region (37) assigned to the front end (32) of the housing (40), that the battery region (36) is arranged with respect to the direction of the longitudinal axis (49) between the bar region (37) and the operating region (2), that the battery region (36) adjoins the operating region (2), that the battery receptacle (7) is arranged completely in the battery region (36), and that the imaginary tangential plane (T) tangentially contacts the housing (40) in the operating region (2) of the housing (40).

2. Working device according to claim 1,
**characterized in that** the tangential plane (T) has a first side (11) and a second side (12), that the first side (11) faces the horizontal plane (E) in the setting-down position, and that the front region (3) of the housing (40) is arranged exclusively on the first side (11) of the imaginary tangential plane (T).

3. Working device according to claim 1 or 2,
**characterized in that** the front region (3) has a front region distance (m) with respect to the imaginary tangential plane (T), that the front region distance (m) is selected to be small and that the working device (1) is designed such that the front region (3) of the housing (40), upon impact of the working device (1) with the imaginary tangential plane (T) on the horizontal plane (E), can contact the horizontal plane (E) and that the working device (1) can thereby elastically deform in such a manner that the working device (1) can absorb the energy of the impact at three locations, namely at the handle tube (8), at the front region (3) and at the operating region (2).

4. Working device according to claim 3,
**characterized in that** the imaginary tangential plane (T) tangentially contacts the housing (40) at a contact point (10), that the front region distance (m) in the setting-down position is less than 10%, in particular less than 5%, in particular less than 3%, in particular 0% of the distance (d1) of the contact point (10) from the horizontal plane (E).

5. Working device according to one of claims 1 to 4,
**characterized in that** the front region (3) of the housing (40) has an impact projection (9), that the impact projection (9) protrudes in the direction towards the tangential plane (T), and that the front region (3) has the smallest distance from the tangential plane (T) in the region of the impact projection (9).

6. Working device according to one of claims 1 to 5,
**characterized in that** the battery receptacle (7) is arranged in the front region (3) of the housing (40) such that the housing (40) can enclose the battery.

7. Working device according to claims 5 and 6,
**characterized in that** the impact projection (9) is part of the battery receptacle (7), in particular that the impact projection (9) forms an outer wall (13) of the battery receptacle (7).

8. Working device according to claim 6 or 7,
**characterized in that** the insertion direction (50) runs parallel to the longitudinal plane (F), and in particular that the battery receptacle (7) has an insertion opening (18) which is arranged, in the setting-down position, on the side of the working device (1) facing away from the horizontal plane (E).

9. Working device according to one of claims 1 to 8,
**characterized in that** the operating region (2) has a hand stop (16) for placing the hand during actuation of the operating element (15), and that the imaginary tangential plane (T) tangentially contacts the operating region (2) at the hand stop (16), and in particular that the hand stop (16) is formed as a projection (17) of the operating region (2), in particular that the hand stop (16) is substantially hump-shaped.

10. Working device according to one of claims 1 to 9,
**characterized in that** the imaginary tangential plane (T) tangentially contacts the housing (40) at a contact point (10), that the working device (1) has, in the operating region (2), a further operating element (19), wherein the further operating element (19) serves for unlocking the operating element (15) or for holding a locking element (35) in an unlocking position, and that the contact point (10) lies, with respect to the direction of the longitudinal axis (49), between the further operating element (19) and the front region (3).

11. Hand-held, battery-powered working device, wherein the working device (1) is in particular a motor chain saw, a hedge trimmer or a cut-off grinder, wherein the working device (1) comprises a housing (40) and a tool (39) fastened thereto, wherein the housing (40) has a rear end (31) to which an operating region (2) of the housing (40) is assigned, wherein the housing (40) has a front end (32) at which the tool (39) is arranged, wherein the housing (40) extends along a longitudinal axis (49) from the rear end (31) to the front end (32), wherein in the operating region (2) an operating element (15) for operating an electric motor (4) of the working device (1) is arranged, wherein the working device (1) is designed such that it can be set down on a horizontal plane (E) in a provided setting-down position, wherein the working device (1) has a longitudinal plane (F) which extends perpendicular to the horizontal plane (E) in the setting-down position and contains the longitudinal axis (49), wherein the housing (40) has a battery receptacle (7), wherein in the operating region (2) of the housing (40) a further operating element (19) is provided, wherein the further operating element (19) protrudes from an operating element opening (21) in the operating region (2) in the setting-down position in a direction away from the horizontal plane (E), wherein a hand stop (16) for placing the hand during actuation of the operating element (15) is formed by the housing (40) in the operating region (2), wherein, in the setting-down position, the operating element opening (21) has, in a side view perpendicular to the longitudinal plane (F), a lowest point (20) which corresponds to the point of the operating element opening (21) having the smallest distance (d2) from the horizontal plane (E), wherein an imaginary contact plane (B) extends perpendicular to the longitudinal plane (F) through the lowest point (20) and tangentially contacts the battery receptacle (7), **characterized in that** the hand stop (16) protrudes beyond the imaginary contact plane (B), and that the imaginary contact plane (B) intersects the hand stop (16).

12. Working device according to claim 11,
**characterized in that** the operating element opening (21) is arranged, in the setting-down position, on the side of the operating region (2) facing away from the horizontal plane (E).

13. Working device according to claim 11 or 12,
**characterized in that** the battery receptacle (7) has an outer wall (13) which is tangentially contacted by the imaginary contact plane (B).

14. Working device according to one of claims 11 to 13,
**characterized in that** the hand stop (16) is formed as a projection (17) of the operating region (2) of the housing (40), in particular that the hand stop (16) is substantially hump-shaped.

15. Working device according to one of claims 11 to 14,
**characterized in that** a battery can be inserted into the battery receptacle (7) in an insertion direction (50), and that the insertion direction (50) runs parallel to the longitudinal plane (F), in particular that the battery receptacle (7) has an insertion opening (18), and in particular that the insertion opening (18) is arranged, in the setting-down position, on the side of the working device (1) facing away from the horizontal plane (E).

## Revendications

1. Appareil de travail portatif alimenté par batterie, l'appareil de travail (1) étant notamment une tronçonneuse à chaîne motorisée, un taille-haie ou une meuleuse de tronçonnage, l'appareil de travail (1) comprenant un boîtier (40) et un outil (39) disposé sur celui-ci, l'appareil de travail (1) comprenant un logement de batterie (7), un accumulateur étant insérable dans le logement de batterie (7) dans une direction d'insertion (50), l'appareil de travail (1) comprenant un tube de poignée (8) qui entoure au moins partiellement, en particulier recouvre, le boîtier (40), le boîtier (40) présentant une extrémité arrière (31), à laquelle est associée une partie de commande (2) du boîtier (40), le boîtier (40) présentant une extrémité avant (32) sur laquelle est disposé l'outil (39), le boîtier (40) s'étendant le long d'un axe longitudinal (49) de l'extrémité arrière (31) jusqu'à l'extrémité avant (32), un organe de commande (15) pour commander un moteur électrique (4) de l'appareil de travail (1) étant disposé dans la partie de commande (2), l'appareil de travail (1) étant conçu de telle sorte qu'il puisse être posé dans une position de dépôt prévue sur un plan horizontal (E), la direction d'insertion (50) s'étendant, dans la position de dépôt, transversalement au plan horizontal (E), l'appareil de travail (1) présentant un plan longitudinal (F) qui, dans la position de dépôt, s'étend perpendiculairement au plan horizontal (E) et contient l'axe longitudinal (49), la partie de commande (2) présentant une ouverture de préhension (33) traversant complètement le boîtier (40) dans une direction transversale au plan longitudinal (F), l'ouverture de préhension (33) présentant, dans la direction de l'axe longitudinal (49), un point d'écartement (P) présentant la plus grande distance, mesurée dans la direction de l'axe longitudinal (49), par rapport à l'extrémité arrière (31) du boîtier (40), la partie de commande (2) du boîtier (40) s'étendant, dans la direction de l'axe longitudinal (49), de l'extrémité arrière (31) du boîtier (40) jusqu'au point d'écartement (P), le boîtier (40) présentant une partie avant (3), la partie avant (3) s'étendant, dans la direction de l'axe longitudinal (49), du point d'écartement (P) jusqu'à l'extrémité avant (32) du boîtier (40), le boîtier (40) présentant un plan tangent fictif (T) qui ne fait que tangenter le boîtier (40), le plan tangent fictif (T) s'étendant perpendiculairement au plan longitudinal (F), le plan tangent fictif (T) tangentant le tube de poignée (8),
**caractérisé en ce que** la partie avant (3) est subdivisée, par rapport à la direction de l'axe longitudinal (49), en une partie de batterie (36) et une partie d'étrier (37) associée à l'extrémité avant (32) du boîtier (40), **en ce que** la partie de batterie (36) est disposée, par rapport à la direction de l'axe longitudinal (49), entre la partie d'étrier (37) et la partie de commande (2), **en ce que** la partie de batterie (36) est adjacente à la partie de commande (2), **en ce que** le logement de batterie (7) est disposé entièrement dans la partie de batterie (36), et **en ce que** le plan tangent fictif (T) tangente le boîtier (40) dans la partie de commande (2) du boîtier (40).

2. Appareil de travail selon la revendication 1,
**caractérisé en ce que** le plan tangent fictif (T) présente un premier côté (11) et un second côté (12), **en ce que** le premier côté (11), dans la position de dépôt, est orienté vers le plan horizontal (E), et **en ce que** la partie avant (3) du boîtier (40) est disposée exclusivement sur le premier côté (11) du plan tangent fictif (T).

3. Appareil de travail selon la revendication 1 ou 2,
**caractérisé en ce que** la partie avant (3) présente, par rapport au plan tangent fictif (T), une distance de partie avant (m), **en ce que** la distance de partie avant (m) est choisie de manière suffisamment faible et **en ce que** l'appareil de travail (1) est conçu de telle sorte que la partie avant (3) du boîtier (40), lors d'un choc de l'appareil de travail (1) avec le plan tangent fictif (T) sur le plan horizontal (E), peut entrer en contact avec le plan horizontal (E), et **en ce que** l'appareil de travail (1) peut, ce faisant, se déformer élastiquement de telle sorte que l'appareil de travail (1) peut absorber l'énergie du choc en trois endroits, à savoir au tube de poignée (8), à la partie avant (3) et à la partie de commande (2).

4. Appareil de travail selon la revendication 3,
**caractérisé en ce que** le plan tangent fictif (T) tangente le boîtier (40) en un point de contact (10), **en ce que** la distance de partie avant (m), dans la position de dépôt, est inférieure à 10 %, notamment inférieure à 5 %, notamment inférieure à 3 %, notamment égale à 0 % de la distance (d1) du point de contact (10) au plan horizontal (E).

5. Appareil de travail selon l'une des revendications 1 à 4,
**caractérisé en ce que** la partie avant (3) du boîtier (40) présente une saillie de choc (9), **en ce que** la saillie de choc (9) fait saillie en direction du plan tangent fictif (T), et **en ce que** la partie avant (3) présente, dans la zone de la saillie de choc (9), la plus petite distance par rapport au plan tangent fictif (T).

6. Appareil de travail selon l'une des revendications 1 à 5,
**caractérisé en ce que** le logement de batterie (7) est disposé dans la partie avant (3) du boîtier (40) de telle sorte que le boîtier (40) peut entourer l'accumulateur.

7. Appareil de travail selon les revendications 5 et 6,
**caractérisé en ce que** la saillie de choc (9) fait partie du logement de batterie (7), notamment **en ce que** la saillie de choc (9) forme une paroi extérieure (13) du logement de batterie (7).

8. Appareil de travail selon la revendication 6 ou 7,
**caractérisé en ce que** la direction d'insertion (50) s'étend parallèlement au plan longitudinal (F), et notamment **en ce que** le logement de batterie (7) présente une ouverture d'insertion (18) qui, dans la position de dépôt, est disposée du côté de l'appareil de travail (1) opposé au plan horizontal (E).

9. Appareil de travail selon l'une des revendications 1 à 8,
**caractérisé en ce que** la partie de commande (2) présente une butée de main (16) destinée à l'appui de la main lors de l'actionnement de l'organe de commande (15), et **en ce que** le plan tangent fictif (T) tangente la partie de commande (2) au niveau de la butée de main (16), et notamment **en ce que** la butée de main (16) est formée comme une saillie (17) de la partie de commande (2), notamment **en ce que** la butée de main (16) est sensiblement en forme de bosse.

10. Appareil de travail selon l'une des revendications 1 à 9,
**caractérisé en ce que** le plan tangent fictif (T) tangente le boîtier (40) en un point de contact (10), **en ce que** l'appareil de travail (1) présente, dans la partie de commande (2), un autre organe de commande (19), ledit autre organe de commande (19) servant à déverrouiller l'organe de commande (15) ou à maintenir un élément de verrouillage (35) dans une position de déverrouillage, et **en ce que** le point de contact (10) est situé, par rapport à la direction de l'axe longitudinal (49), entre ledit autre organe de commande (19) et la partie avant (3).

11. Appareil de travail portatif alimenté par batterie, l'appareil de travail (1) étant notamment une tronçonneuse à chaîne motorisée, un taille-haie ou une meuleuse de tronçonnage, l'appareil de travail (1) comprenant un boîtier (40) et un outil (39) fixé sur celui-ci, le boîtier (40) présentant une extrémité arrière (31) à laquelle est associée une partie de commande (2) du boîtier (40), le boîtier (40) présentant une extrémité avant (32) sur laquelle est disposé l'outil (39), le boîtier (40) s'étendant le long d'un axe longitudinal (49) de l'extrémité arrière (31) à l'extrémité avant (32), un organe de commande (15) pour commander un moteur électrique (4) de l'appareil de travail (1) étant disposé dans la partie de commande (2), l'appareil de travail (1) étant conçu de manière à pouvoir être posé dans une position de dépôt sur un plan horizontal (E), l'appareil de travail (1) présentant un plan longitudinal (F) qui, dans la position de dépôt, s'étend perpendiculairement au plan horizontal (E) et contient l'axe longitudinal (49), le boîtier (40) présentant un logement de batterie (7), un autre organe de commande (19) étant prévu dans la partie de commande (2) du boîtier (40), ledit autre organe de commande (19) faisant saillie à partir d'une ouverture d'organe de commande (21) dans la partie de commande (2), dans la position de dépôt, dans une direction s'éloignant du plan horizontal (E), une butée de main (16) étant formée par le boîtier (40) dans la partie de commande (2) pour l'appui de la main lors de l'actionnement de l'organe de commande (15), l'ouverture d'organe de commande (21) présentant, dans la position de dépôt, dans une vue de côté perpendiculaire au plan longitudinal (F), un point le plus bas (20) correspondant au point de l'ouverture d'organe de commande (21) ayant la plus petite distance (d2) par rapport au plan horizontal (E), un plan de contact fictif (B) s'étendant perpendiculairement au plan longitudinal (F) à travers le point le plus bas (20) et tangentant le logement de batterie (7),
**caractérisé en ce que** la butée de main (16) fait saillie au-delà du plan de contact fictif (B), et **en ce que** le plan de contact fictif (B) coupe la butée de main (16).

12. Appareil de travail selon la revendication 11,
**caractérisé en ce que** l'ouverture d'organe de commande (21), dans la position de dépôt, est disposée du côté de la partie de commande (2) opposé au plan horizontal (E).

13. Appareil de travail selon la revendication 11 ou 12,
**caractérisé en ce que** le logement de batterie (7) présente une paroi extérieure (13) qui est tangentée par le plan de contact fictif (B).

14. Appareil de travail selon l'une des revendications 11 à 13,
**caractérisé en ce que** la butée de main (16) est formée comme une saillie (17) de la partie de commande (2) du boîtier (40), notamment **en ce que** la butée de main (16) est sensiblement en forme de bosse.

15. Appareil de travail selon l'une des revendications 11 à 14,
**caractérisé en ce qu'**un accumulateur est insérable dans le logement de batterie (7) dans une direction d'insertion (50), et **en ce que** la direction d'insertion (50) s'étend parallèlement au plan longitudinal (F), notamment **en ce que** le logement de batterie (7) présente une ouverture d'insertion (18), et notamment **en ce que** l'ouverture d'insertion (18), dans la position de dépôt, est disposée du côté de l'appareil de travail (1) opposé au plan horizontal (E).
